# EUROPÄISCHE PATENTSCHRIFT

(11) **EP 3 470 823 B1**
(45) Veröffentlichungstag und Bekanntmachung des Hinweises auf die Patenterteilung: **30.10.2019**
(21) Anmeldenummer: 18210396.0
(22) Anmeldetag: 21.03.2016
(51) Int. Cl.: G01N 21/359, G01N 3/56

(54) **VERFAHREN ZUR BESTIMMUNG DER ABRIEBFESTIGKEIT VON MINDESTENS EINER AUF EINER TRÄGERPLATTE ANGEORDNETEN VERSCHLEISSSCHICHT**
METHOD FOR DETERMINING THE ABRASION RESISTANCE OF AT LEAST ONE WEAR LAYER ON A SUPPORT PLATE
PROCÉDÉ DE DÉTERMINATION DE LA RÉSISTANCE À LA FRICTION D'AU MOINS UNE COUCHE D'USURE DISPOSÉE SUR UNE PLAQUE DE SUPPORT

(30) Priorität: 09.04.2015 EP 15162969; 26.11.2015 WO PCT/EP2015/077775
(43) Veröffentlichungstag der Anmeldung: 17.04.2019
(62) Teilanmeldung aus: 16711601.1
(73) Patentinhaber: Flooring Technologies Ltd., Kalkara SCM1001 (MT)
(72) Erfinder: KALWA, Norbert Dr., 32805 Horn-Bad Meinberg (DE); DENK, Andre, 16909 Wittstock/Dosse (DE)
(74) Vertreter: Maikowski & Ninnemann Patentanwälte Partnerschaft mbB

(56) Entgegenhaltungen:
- EP-A1- 2 808 636
- EP-A1- 2 915 658
- DE-A1-102009 037 541

## Beschreibung

Die vorliegende Erfindung betrifft ein Verfahren zur Bestimmung der Abriebfestigkeit von mindestens einer auf einer Trägerplatte angeordneten Verschleißschicht nach dem Oberbegriff des Anspruchs 1, die Verwendung eines NIR-Detektors zur Bestimmung der Abriebfestigkeit der auf einer Trägerplatte aufgetragenen Verschleißschicht nach Anspruch 15 und eine Vorrichtung zur Durchführung des Verfahrens nach Anspruch 16.

### Beschreibung

Holzwerkstoffplatten als Trägermaterialien werden in den verschiedensten Bereichen eingesetzt und sind weit verbreitet. So sind Holzwerkstoffplatten unter anderem aus der Verwendung als Fußbodenpaneele, z.B. in Form von Laminatböden, bekannt. Derartige Werkstoffplatten werden üblicherweise aus Holzfasern, Holzspänen oder Strands hergestellt. Im Falle von Laminatböden werden z.B. aus Holzfasern hergestellte HDF-Platten mit vielfältigen Dekoren verwendet.

Insbesondere im Falle der Verwendung von Holzwerkstoffplatten als Laminatböden ist es wünschenswert und notwendig, die dekorativen Oberflächen durch Aufbringen von geeigneten Verschleißschichten vor Abrieb und Abnutzung zu schützen. Als Verschleißschichten werden insbesondere aushärtbare Lacke auf der Basis von Acrylharz, Epoxidharz oder Melaminharzen verwendet.

Zur Verbesserung der Eigenschaften hinsichtlich Verschleißfestigkeit und Kratzfestigkeit ist es bekannt, in diese Harzschichten geeignete Partikel in einem Größenbereich von 25 nm bis 150 µm einzulagern. Hierbei dienen die größeren Partikel der Verbesserung des Abriebwiderstandes und die kleineren Partikel der Verbesserung der Kratzfestigkeit. Als Partikel können z.B. Nanopartikel aus Siliziumkarbid, Siliziumdioxid oder α-Aluminiumoxid eingesetzt werden. Entsprechend ist bei der Produktion von Laminatfußböden die Ermittlung der Abriebfestigkeit der ausgehärteten Verschleißschicht ein entscheidendes Kriterium der Qualitätssicherung.

Im Wesentlichen existieren zwei mögliche Ansätze für die Herstellung einer Verschleißschicht auf einer geeigneten Trägerplatte. So kann die Verschleißschicht aus einem Papieraufbau oder einem Flüssigaufbau bestehen. Im Falle eines Papieraufbaus besteht die Verschleißschicht aus einem dünnen transparenten Papier, das mit einem duroplastischen Harz, wie z.B. einem Melaminformaldehydharz und verschleißhemmenden Partikeln gefüllt ist. Im Falle eines Flüssigaufbaus umfasst die Verschleißschicht eine Harzschicht, die ebenfalls verschleißhemmende Partikel, wie z.B. Korundpartikel sowie andere Hilfsstoffe, wie z.B. Glaskugeln oder Zellulose enthalten kann. Im Falle des Papieraufbaus wird die Verschleißschicht dann mit einem ebenfalls imprägnierten Dekorbogen auf die Oberseite einer Holzwerkstoffplatte aufgelegt oder im Falle des Flüssigaufbaus wird die verschleißhemmende Partikel enthaltende Harzschicht auf eine bereits grundierte und bedruckte Platte oder auch auf eine bereits auf der Platte angeordnete Papierlage in flüssiger Form aufgetragen und getrocknet.

Die Abriebfestigkeit dieser Verschleißschichten hängt hauptsächlich von der Menge der in die Verschleißschicht eingetragenen abriebfesten Partikel ab. Im Falle des Papieraufbaus werden die verschleißhemmenden Partikel auf das Papier während der Imprägnierung aufgestreut oder es wird eine korundhaltige Harzslurry aufgetragen oder aufgewalzt. Die Bestimmung der aufgetragenen Menge an abriebfesten Partikeln kann in diesem Falle durch einfache Methoden, wie z.B. die Veraschung des Overlays erfolgen, und zwar bevor das Overlaypapier auf die Trägerplatte aufgetragen wird.

Im Falle einer Verschleißschicht im Flüssigaufbau ist diese Methode allerdings nicht anwendbar, da die verschleißhemmenden Partikel zusammen mit dem flüssigen Harz auf eine bereits grundierte und bedruckte Platte aufgetragen und getrocknet werden. Die Bestimmung der Menge an abriebfesten Partikeln mittels Veraschung der Beschichtung ist durch die aufgetragene Grundierung, die die anorganischen Pigmente enthält, nur schwer möglich.

Eine Möglichkeit der Mengenbestimmung an abriebfesten Partikeln in einer Verschleißschicht in Form eines Flüssigaufbaus besteht in der Berechnung der Menge an Feststoffpartikeln in der durch Auswiegen bestimmten aufgetragenen Flüssigharzmenge ausgehend von der bekannten Menge an Feststoffpartikeln (z.B. Korundpartikel) in einem Harzansatz, was aber nicht unbedingt den tatsächlichen Wert der Feststoffpartikelmenge in der Beschichtung entsprechen muss.

Ein weiterer Ansatz der Bestimmung der Abriebfestigkeit von ausgehärteten Schutzschichten auf Laminatböden ist gemäß DIN EN 13329:2009 (D) möglich. Hierbei wird die Widerstandsfähigkeit der Deckschicht bzw. Verschleißschicht gegen ein Durchscheuern geprüft. Es werden Proben (z.B. in der Größe 10 cm x 10 cm) aus der zu prüfenden Platte oder dem zu prüfenden Muster ausgeschnitten. Diese Proben werden in eine Prüfvorrichtung eingespannt, an der sich zwei schwenkbare Arme mit beweglichen Reibrollen und ein Gewicht (500 g) befinden. Die Reibrollen sind mit normiertem Schleifpapier beklebt. Die eingespannten Proben rotieren unter den Reibrädern. Alle 200 Umdrehungen wird das Schleifpapier gewechselt und der Verschleiß der Oberfläche geprüft. Die Prüfung ist beendet, wenn in drei Quadranten des Prüfkörpers der Untergrund (Druckbasispapier, Grundierung) in einer Größe von jeweils 0,6 mm² sichtbar ist. Die bis zur Freilegung des Dekors notwendige Anzahl an Umdrehungen wird als Ergebnis angegeben. In der DIN EN 13329 werden folgende Abriebklassen abgestuft und nach zunehmender Beanspruchung definiert:

| Abriebklasse | AC1 | AC2 | AC3 | AC4 | AC5 |
|---|---|---|---|---|---|
| Anzahl der Umdrehungen | ≥ 900 | ≥ 1500 | ≥ 2000 | ≥ 4000 | ≥ 6000 |

Folgend dieser Definition erfordert die Abriebklasse AC1 lediglich um die 900 Umdrehungen, um das Dekor freizulegen. Entsprechend weist eine Verschleißschicht der Abriebklasse AC1 die geringste Abriebfestigkeit auf.

Das beschriebene normierte Prüfverfahren ist allerdings zeitlich sehr aufwändig und liefert nur Einzelwerte, die keine Aussage für die gesamte Produktionsbreite zulassen. So sind die Prüfkörper nur 10 cm x 10 cm groß und werden üblicherweise nur an wenigen Stellen aus der Produktionsplatte entnommen. Um eine Aussage über die gesamte Produktionsplatte machen zu können, müsste die Platte in eine Vielzahl von Prüfkörpern geteilt und geprüft werden.

Die Prüfung ist allerdings wegen des teuren Prüfmittelschleifpapiers sehr kostenintensiv und dauert zudem in den höheren Abriebklassen teilweise mehrere Stunden. Zum Beispiel dauert die Prüfung einer Probe mit der Abriebklasse AC4 mindestens 90 Minuten und kostet mindestens 20 Euro (nur verbrauchte Schleifpapierstreifen). An den Produktionslinien werden die Produkte im Rahmen der Qualitätsüberwachung stichprobenartig mindesten dreimal täglich auf die Verschleißfestigkeit geprüft. Bei einer Prüfung der Abriebfestigkeit werden (nach DIN EN 13329) drei Proben untersucht.

In der folgenden Tabelle ist der minimale Zeit- und Kostenaufwand für die Prüfung der Verschleißfestigkeit an einem Tag an einer Produktionsanlage nach DIN EN 13329 für ein Produkt mit der Abriebklasse AC4 zusammengefasst:

| | Zeitaufwand (Stunden) | Materialkosten (Euro) |
|---|---|---|
| Eine Probe (AC4) | 1,5 | 20* |
| Ein Test (drei Proben) | 3** | 60 |
| **Ein Tag (drei Tests)** | **7,5** | **180** |

| | | |
|---|---|---|
| * Preis für ein Schleifpapierstreifen beträgt 0,50 Euro ** Es können zwei Proben gleichzeitig geprüft werden | | |

Demzufolge nimmt die routinemäßige Kontrolle der Verschleißfestigkeit an einer Produktionsanlage pro Tag 7,5 Stunden in Anspruch und die Materialkosten belaufen sich auf mindesten 180 Euro.

Insbesondere bei der Verwendung eines Flüssigaufbaus einer Verschleißschicht (d.h. beim Flüssigauftrag von Harz und abriebfesten Partikeln) kann es durch die Veränderungen von Produktionsparametern zu unerwünschten Schwankungen im Auftrag und damit zu Schwankungen in der Verschleißfestigkeit kommen. So ist z.B. durch die permanente Abnahme und Nachdosierung in den Auftragsbehälter eine Viskositätsänderung des Auftragsmediums möglich. Auch können Temperaturschwankungen und Verschleiß der Auftragswalzen den Auftrag negativ beeinflussen. Darüber hinaus kann ein schwankender Abriebwert durch eine ungleichmäßige Auftragsmenge sowie ungleichmäßige Verteilung der Feststoffe in der Verschleißschicht entstehen.

Da es sich bei dem Trägermaterial im vorliegenden Fall insbesondere um Holzwerkstoffe, insbesondere um mittel- oder hochdichte Faserplatten handelt, können, wie bereits oben beschrieben, keine Verfahren eingesetzt werden, die z.B. bei der Papierimprägnierung zum Einsatz kommen. So steht der Verwendung von IR-Strahlung entgegen, dass eine Durchstrahlung des Trägermaterials nicht möglich ist. Andere Technologien, wie Röntgenfluoreszenz, sind ebenfalls nur bedingt einsetzbar, da diese erhöhte Sicherheitsstandards bezüglich des Strahlenschutzes voraussetzen.

Der vorliegenden Erfindung liegt daher die technische Aufgabe zugrunde, ein einfaches, aber effizientes Verfahren bereitzustellen, mit dem die Abriebfestigkeit einer mit einer Verschleißschicht versehenen Trägerplatte (insbesondere einer Holzwerkstoffplatte) hinreichend genau bestimmt bzw. vorhergesagt werden kann. Die Bestimmung der Abriebfestigkeit der Verschleißschicht soll dabei sowohl nach dem Verpressen und Aushärten von Verschleißschicht und Trägerplatte anhand der ausgehärteten Verschleißschicht als auch vor dem Verpressen und Aushärten der Verschleißschicht möglich sein. Zudem sollte das Verfahren keine erhöhten Sicherheitsstandards an die Anlagentechnik erfordern und eine möglichst geringe Fehleranfälligkeit aufweisen.

Die gestellte Aufgabe wird erfindungsgemäß durch ein Verfahren mit den Merkmalen des Anspruchs 1 gelöst.

Demnach wird ein Verfahren zur Bestimmung der Abriebfestigkeit von mindestens einer auf einer Trägerplatte angeordneten Verschleißschicht bereitgestellt. Das vorliegende Verfahren umfasst dabei die folgenden Schritte:
- Aufnehmen von mindestens einem NIR-Spektrum der auf der mindestens einen Trägerplatte angeordneten Verschleißschicht
   a) vor dem Aushärten der mindestens einen Verschleißschicht,
   b) nach dem Aushärten der mindestens einen Verschleißschicht, oder
   c) vor und nach dem Aushärten der mindestens einen Verschleißschicht unter Verwendung von mindestens einem NIR-Detektor in einem Wellenlängenbereich zwischen 500 nm und 2500 nm, bevorzugt zwischen 700 nm und 2000 nm, insbesondere bevorzugt zwischen 900 nm und 1700 nm;
- Bestimmen der Abriebfestigkeit der mindestens einen Verschleißschicht durch Vergleich des für die zu bestimmende Abriebfestigkeit der mindestens einen Verschleißschicht ermittelten NIR-Spektrums mit mindestens einem für mindestens eine Referenzprobe der mindestens einen Verschleißschicht mit bekannter Abriebfestigkeit ermittelten NIR-Spektrums mittels einer multivarianten Datenanalyse (MDA),
- wobei das mindestens eine für die mindestens eine Referenzprobe ermittelte NIR-Spektrum mit bekannter Abriebfestigkeit der mindestens einen Verschleißschicht a) nach dem Aushärten, oder b) vor und nach dem Aushärten unter Verwendung desselben NIR-Detektors in einem Wellenlängenbereich zwischen 500 nm und 2500 nm, bevorzugt zwischen 700 nm und 2000 nm, insbesondere bevorzugt zwischen 900 nm und 1700 nm, vorher bestimmt wurde.

Das vorliegende Verfahren ermöglicht demnach die Bestimmung der Abriebfestigkeit einer auf einer Trägerplatte angeordneten Verschleißschicht, wobei die Abriebfestigkeit insbesondere eine Funktion der in der Verschleißschicht enthaltenen Menge an abriebfesten Partikeln darstellt.

Ein wesentlicher Aspekt des vorliegenden Verfahrens ist, dass die Abriebfestigkeit der Verschleißschicht sowohl vor dem Aushärten der Verschleißschutzschicht, nach dem Aushärten der Verschleißschutzschicht als auch kombiniert (zweifach) vor und nach dem Aushärten der Schicht ermittelt wird. Unter Verwendung des NIR-Detektors wird mithilfe von NIR-Strahlung ein NIR-Spektrum der auf die Trägerplatte aufgetragenen Verschleißschicht erzeugt, so dass für die aufgetragene Schicht je nach Konzentration und Menge derselbigen ein NIR-Spektrum mit spezifischen Peaks (Absorptionsbanden) erzeugt wird. Dabei wird das NIR-Signal in die Probe eingestrahlt, am Träger wieder reflektiert und am Messkopf detektiert. Bei dieser Messung werden in wenigen Sekunden mehrere hundert NIR-Messungen (z.B. in einer Sekunde bis zu fünfzehn NIR-Messungen) durchgeführt, so dass eine statistische Absicherung der Werte gewährleistet wird. Das vorliegende Verfahren zur Bestimmung der Abriebfestigkeit einer auf einer Trägerplatte angeordneten Verschleißschicht unter Verwendung eines NIR-Detektors nutzt den Umstand aus, dass die NIR-Strahlung nicht durch die gesamte Trägerplatte, d.h. durch Verschleißschicht und Trägerplatte hindurchdringt, sondern an der Oberfläche reflektiert wird. Insbesondere erfolgt im vorliegenden Falle einer Verschleißschicht die NIR-Messung in diffuser Reflektion. Bei der diffusen Reflexion wird das einfallende Licht großenteils an der Probenoberfläche in alle Richtungen reflektiert. Ein Teil des einfallenden Lichtes durchdringt die oberflächennahe Schichten der Probe, wo es absorbiert wird und der andere Teil wird diffus gestreut. Die von der Oberfläche oder von dem oberflächennahen Bereich reflektierte Strahlung wird von dem NIR-Detektor erfasst und zur Bestimmung der Abriebfestigkeit verwendet. Das aufgenommene NIR-Spektrum beinhaltet neben der Information zur chemischen Eigenschaften der Probe aus der Absorption durch chemische Bindungen z.B. im Harz auch Informationen über physikalische Beschaffenheit der äußeren Oberflächenschichten der Probe aus der Streuung.

In einer ersten Ausführungsvariante des vorliegenden Verfahrens wird die Abriebfestigkeit der mindestens einen Verschleißschicht vor dem Aushärten der Verschleißschicht innerhalb, d.h. online, der Produktionslinie der Werkstoffplatten bestimmt. In dieser online-Variante wird demnach die Abriebfestigkeit im laufenden Produktionsprozess bestimmt. Dies ermöglicht eine direkte Steuerung und Eingriff in den Produktionsprozess.

In einer zweiten Ausführungsvariante des vorliegenden Verfahrens wird die Abriebfestigkeit der mindestens einen Verschleißschicht nach dem Aushärten der Verschleißschicht außerhalb (d.h. offline) der Produktionslinie der Werkstoffplatten bestimmt. In dieser Variante wird demnach eine fertig verpresste und ausgehärtete Werkstoffplatte aus der Produktionslinie entnommen bzw. ausgeschleust und offline z.B. in einem separaten Labor im Rahmen einer routinemäßigen Qualitätskontrolle vermessen.

Diese Variante zur Prüfung der Verschleißfestigkeit einer ausgehärteten Beschichtung auf einer Werkstoffplatte, wie z.B. einer HDF-Platte mit Hilfe NIR-Spektroskopie bietet eine Alternative zu der oben beschriebenen zeitaufwendigen und kostenintensiven Prüfung der Beständigkeit gegen Abrieb nach DIN EN 13329. So erfolgt die Prüfung der Verschleißfestigkeit mit Hilfe eines NIR-Labormessgerätes in weniger als eine Minute, was einen hohen Probendurchsatz ermöglicht. Zudem ist die Messung zerstörungsfrei. Die Messergebnisse werden in elektronischer Form automatisch abgespeichert und stehen für mögliche Weiterwendung zur Verfügung. Des Weiteren können Proben von mehreren Anlagen in kurzer Zeit auf die Verschleißfestigkeit geprüft werden. Auch werden bei einem Ersetzen der Prüfung der Verschleißfestigkeit nach DIN EN 13329 im Rahmen der routinemäßigen Qualitätssicherung durch die NIR-Messung die Materialkosten und der Zeitaufwand für die Durchführung der Prüfung gesenkt und der Stichprobenumfang deutlich erhöht. Die zeitaufwendige und kostenintensive Prüfung der Beständigkeit gegen Abrieb nach DIN EN 13329 wird lediglich nur für die Kalibrierung und Validierung der NIR- Messmethode genutzt.

Ein weiterer wesentlicher Aspekt bei dieser Prüfung ist, dass die Fehler bzw. die Schwankungen der Prüfergebnisse durch die subjektive Beurteilung des Prüfenden deutlich reduziert werden. Diese Schwankungen können durchaus bei +/- 20% liegen. Dies wird zum einen durch die schwierige Abschätzung der Größe der Beschädigung des IP (initial point = erster Angriff = erste sichtbare Beschädigung des Dekors mit einer Größe von 0,6 mm²) und zum anderen durch die falsche Abschätzung der Größe des abgeriebenen Bereichs verursacht. Die Schwankungen bei der Prüfung der Abriebfestigkeit mittels Taber Abraser (DIN EN 13329) können sogar bei mehreren Prüfkörpern aus einer Probe sehr groß (bis zu 30%) ausfallen. Zudem werden mit der neuen Methode alle Schwankungen des Prüfmittels Abriebstreifen und des Taber Abrasers (Shore-Härte Gummirollen, falsche Positionierung Staubsauger usw.) eliminiert. Auch fällt die nach Norm für die Prüfung vorgesehene Klimatisierung (24 h) weg. Es ist bekannt, dass diese einen erheblichen Einfluss auf das Prüfergebnis hat. Das NIR-Messgerät weist nach Kalibrierung ein deutlich geringeren Fehler bzw. Schwankung der Messwerte von <10% auf.

In einer dritten Variante des vorliegenden Verfahrens wird die Abriebfestigkeit der mindestens einen Verschleißschicht vor dem Aushärten der Verschleißschicht innerhalb der Produktionslinie und nach dem Aushärten der Verschleißschicht außerhalb der Produktionslinie bestimmt. In dieser zweiten Verfahrensvariante erfolgt somit eine Kombination von online (vor dem Aushärten) und offline (nach dem Aushärten z.B. als Labormessung). Vorteilhaft ist dabei, dass die mit der Onlinemessung innerhalb des laufenden Produktionsprozesses permanent möglichen steuernden Eingriffe mit der nachgeschalteten Labormessung eine Art Gegenprüfung/Verifizierung erfahren. Dies ist insbesondere in komplexen Prozessen von herausragender Bedeutung.

In einer bevorzugten Ausführungsform des vorliegenden Verfahrens umfasst die Referenzprobe mit bekannter Abriebfestigkeit der Verschleißschicht eine auf einer Trägerplatte aufgetragene Verschleißschicht, wobei Trägerplatte und Verschleißschicht der Referenzprobe gleichartig sind zu der zu vermessenden Probe aus Trägerplatte und Verschleißschicht; d.h. die Zusammensetzung der zu vermessenden Probe und der Referenzprobe sind gleichartig.

In einer weiteren Ausführungsform des vorliegenden Verfahrens erfolgt die Bestimmung der Abriebfestigkeit der Verschleißschicht der Referenzprobe vor oder nach dem Aushärten derselbigen anhand von mindestens einer der Referenzprobe entnommenen Einzelprobe. Dabei ist es bevorzugt, wenn die Abriebfestigkeit der Verschleißschicht der Referenzprobe anhand von mindestens einer, bevorzugt mindestens vier oder mehr der Referenzprobe entnommenen Einzelproben bestimmt wird. Hierbei erfolgt die Bestimmung der Abriebfestigkeit der Einzelproben der Referenzprobe insbesondere gemäß DIN EN 13 329:2009 (D).

Entsprechend dem vorliegenden Verfahren erfolgt die Kalibrierung durch Aufnahme eines NIR-Spektrums einer mit einer Verschleißschicht beschichteten Trägerplatte in zweifacher Weise.

In einer ersten Variante wird die Kalibrierung anhand einer von mit der Verschleißschicht versehenen, und bereits verpressten und ausgehärteten Trägerplatte vorgenommen. Für die Kalibrierung werden von Proben mit verschiedenen Dekoren und Plattenstärken mit einem NIR-Gerät NIR-Spektren aufgenommen. Nach Aufnahme der NIR-Spektren werden die Proben auf ihre Abriebfestigkeit (gemäß dem Standardverfahren DIN EN 13329 (z.B. DIN EN 13329:2009, D) bestimmt.

In einer zweiten Variante erfolgt die Kalibrierung vor dem Aushärten und Verpressen, d.h. anhand einer beschichteten, aber noch nicht ausgehärteten und verpressten Trägerplatte, die nach dem Press- und Härtungsvorgang auf die Abriebfestigkeit geprüft wird, und wie folgt durchgeführt wird: Eine vorgrundierte und bedruckte Trägerplatte (z.B. eine Holzwerkstoffträgerplatte) wird mit einer abriebfeste Partikel enthaltenden Verschleißschicht beschichtet. Vor dem Press- und Aushärtungsvorgang wird von der mit der Verschleißschicht versehenen Platte ein NIR-Spektrum aufgenommen. Anschließend erfolgt ein Verpressen der Platte, z.B. in einer Kurztaktpresse, wobei es zu einer vollständigen Aushärtung der Verschleißschutzschicht kommt. Nach dem Abkühlen der mit der Verschleißschicht versehenen Platte werden mehrere Einzelproben für die Prüfung der Abriebfestigkeit entnommen, wobei die Entnahme der Einzelproben für die Prüfung der Abriebfestigkeit bevorzugt an den Stellen der beschichteten Holzwerkstoffplatte erfolgt, an denen das NIR-Spektrum vorher aufgenommen wurde. Die Bestimmung der Abriebfestigkeit der Einzelproben erfolgt gemäß dem oben beschriebenen Standardverfahren DIN EN 13329:2009 (D) für Laminatböden.

Aus den jeweils ermittelten Abriebwerten wird ein Mittelwert gebildet, welcher dem jeweiligen NIR-Spektrum zugeordnet wird. Auf diese Weise werden mehrere Referenzspektren von beschichteten Platten mit farblich unterschiedlichen Dekoren aufgenommen. Aus den Referenzspektren wird ein Kalibrationsmodell erstellt, welches zur Bestimmung der Abriebfestigkeit einer unbekannten Probe genutzt werden kann. Bei farblich sehr unterschiedlichen Dekoren es ist auch denkbar jeweils Cluster von Dekoren zu bilden, die eine ähnliche Farbeinteilung aufweisen. Die Erstellung des Kalibrationsmodells erfolgt mittels multivariater Datenanalyse (MDA), wobei ein Vergleich und die Interpretation der NIR-Spektren sinnvollerweise über den gesamten aufgenommenen Spektralbereich vorgenommen wird. Bei multivariaten Analysemethoden werden typischerweise mehrere statistische Variablen zugleich untersucht. Hierzu wird die in einem Datensatz enthaltene Zahl von Variable reduziert, ohne gleichzeitig die darin enthaltene Information zu mindern.

Im vorliegenden Fall erfolgt die multivariate Datenanalyse über das Verfahren der Partial Least Squares (PLS-Regression), wodurch ein geeignetes Kalibrationsmodell erstellt werden kann. Die Auswertung der gewonnenen Daten wird bevorzugt mit einer geeigneten Analysesoftware vorgenommen, wie z.B. mit der Analysesoftware SIMCA-P der Firma Umetrix AB oder The Unscrambler der Firma CAMO.

Ein Vorteil der Ermittlung eines NIR-Spektrums zur Bestimmung der Abriebfestigkeit von Verschleißschichten besteht darin, dass der NIR-Detektor über die gesamte Plattenbreite traversieren kann und bestimmte Problembereiche analysieren kann. Zudem stehen die Messwerte sofort zur Verfügung und erlauben einen unmittelbaren Eingriff in den Produktionsprozess, was bei anderen Verfahren nicht ohne weiteres möglich ist. Das vorliegende Verfahren ermöglicht die Anwendung eines automatisch geregelten Systems mit Alarmmeldung und der automatischen Anpassung von Abriebfestigkeit des Produktes durch eine automatische Anpassung der Auftragsmenge an abriebfesten Partikeln, ausgehend von einer NIR-Messung.

Somit ergibt sich für das vorliegende Verfahren eine Reihe von Vorteilen: zerstörungsfreie kontinuierliche Ermittlung der Abriebfestigkeit der Verschleißschutzschicht, und automatisch geregeltes System mit Alarmmeldung und eine Messung über die gesamte Produktionsbreite.

In einer Ausführungsform des vorliegenden Verfahrens ist die mindestens eine Verschleißschicht ausgewählt aus der Gruppe enthaltend
a) mindestens eine wärmehärtbare Schutzschicht, und/oder
b) mindestens eine UV-härtbare und/oder Elektronen-härtbare (ESH)-Schutzschicht.

In einer besonders bevorzugten Ausführungsform des vorliegenden Verfahrens wird eine wärmehärtbare Harzschicht a) als Verschleißschicht verwendet. Die wärmehärtbare Harzschicht kann dabei neben den abriebfesten Partikeln, natürliche und/oder synthetische Fasern und auch weitere Additive enthalten. Eine solche wärmehärtbare Harzschicht wird auch als Flüssigoverlay bezeichnet. Das wärmehärtbare Harz ist bevorzugt ein formaldehydhaltiges Harz, insbesondere ein Melamin-Formaldehyd-Harz, ein Melamin-Harnstoff-Formaldehyd-Harz oder ein Harnstoff-Formaldehyd-Harz.

Die in der mindestens einen Verschleißschicht, wie der wärmehärtbaren Harzschicht, enthaltenen abriebfesten Partikel, sind insbesondere ausgewählt aus der Gruppe enthaltend Aluminiumoxide (z. B. Korund), Borcarbide, Siliziumdioxide (z. B. Glaskugeln), Siliziumcarbide.

Wie erwähnt, kann die Verschleißschicht z.B. in Form einer wärmehärtbaren Harzschicht auch natürliche oder synthetische Fasern, ausgewählt aus der Gruppe enthaltend Holzfasern, Zellulosefasern, partiell gebleichte Zellulosefasern, Wollfasern, Hanffasern und organische oder anorganische Polymerfasern, enthalten. Als weitere Additive können Flammschutzmittel und/oder lumineszierende Stoffe zugegeben werden. Geeignete Flammschutzmittel können ausgewählt sein aus der Gruppe enthaltend Phosphate, Borate, insbesondere Ammoniumpolyphosphat, Tris(tribromneopentyl)phosphat, Zinkborat oder Borsäurekomplexe von mehrwertigen Alkoholen. Als lumineszierende Stoffe können fluoreszierende oder phosphoreszierende Stoffen, insbesondere Zinksulfit und Alkalialuminate zum Einsatz kommen.

Ein Verfahren zur Herstellung einer Verschleißschicht in Form einer wärmehärtbaren Harzschicht (Flüssigoverlay) ist unter anderem in der EP 233 86 93 A1 beschrieben. In dem darin beschriebenen Beispiel erfolgt zunächst nach Reinigung der Oberfläche einer Holzwerkstoffplatte das Aufbringen einer ersten oberen, abriebfeste Partikel (z.B. Korundpartikel) enthaltenen Harzschicht auf eine Holzwerkstoffplatte als Trägerplatte, ein Trocknen dieser ersten Harzschicht, z.B. bis auf eine Restfeuchte von 3-6 Gew%, anschließendes Aufbringen einer zweiten, Zellulosefasern enthaltenen Harzschicht auf die Holzwerkstoffplatte, wiederholtes Trocknen bzw. Antrocknen der zweiten Harzschicht, z.B. bis auf eine Restfeuchte von 3-6 Gew%, Aufbringen einer mindestens dritten Glaspartikel enthaltenen Harzschicht auf die Holzwerkstoffplatte mit anschließendem Antrocknen der dritten Harzschicht, z.B. ebenfalls auf eine Restfeuchte von 3-6 Gew% und ein finales Verpressen des Schichtaufbaus unter Druck- und Temperatureinfluss.

Entsprechend kann die mindestens eine Verschleißschicht, z.B. in Form der hier beschriebenen wärmehärtbaren Harzschicht, mindestens zwei Lagen, bevorzugt mindestens drei nacheinander aufgetragene Lagen umfassen. Dabei ist die Auftragsmenge der Lagen gleich oder verschieden und kann jeweils zwischen 1 und 50 g/m², bevorzugt zwischen 2 und 30 g/m², insbesondere zwischen 5 und 15 g/m², betragen.

Das Flüssigoverlay wird bevorzugt auf die Oberseite der Holzwerkstoffplatte aufgetragen; auf die Rückseite der Holzwerkstoffplatte erfolgt bevorzugt der Auftrag eines flüssigen Gegenzuges.

Gemäß der Variante b) der vorliegenden Verschleißschutzschicht ist es vorgesehen, dass diese in Form einer UV-härtbaren und/oder Elektronenstrahl-härtbaren (ESH)-Schutzschicht vorliegt. Hierfür sind insbesondere strahlenhärtbare, acrylathaltige Lacke einsetzbar. Typischerweise enthalten die als Verschleißschicht verwendeten strahlenhärtbaren Lacke Methacrylate, wie z.B. Polyester(meth)acrylate, Polyether(meth)acrylate, Epoxy(meth)acrylate oder Urethan(meth)acrylate. Es ist auch denkbar, dass das verwendete Acrylat bzw. der acrylathaltige Lack substituierte oder unsubstituierte Monomere, Oligomere und/oder Polymere, insbesondere in Form von Acrylsäure, Acrylether und/oder Acrylsäureestermonomeren, -oligomeren oder -polymeren enthält.

In einer Ausführungsform sind bevorzugterweise mehr als eine strahlenhärtbare Schutzschicht, bevorzugt zwei oder drei Schutz- bzw. Verschleißschichten, vorgesehen, die jeweils aufeinander angeordnet oder aufgetragen werden. In solchen Fällen kann die Auftragsmenge für jede einzelne Schutzschicht bzw. Lage einer Schutzschicht zwischen 10 g/m² und 50 g/m², bevorzugt 20 g/m² und 30 g/m² variieren oder gleich sein. Die Gesamtauftragsmenge der Verschleißschicht kann in Abhängigkeit von der Anzahl der Lagen zwischen 30 g/m² und 150 g/m², bevorzugt 50 g/m² und 120 g/m² variieren.

Auch kann die mindestens eine Verschleißschutzschicht chemische Vernetzer enthalten, z.B. auf Basis von Isocyanaten, wodurch die Zwischenhaftung der einzelnen übereinander angeordneten Verschleißschutzschichten erhöht wird.

Wie bereits für die wärmehärtbare Harzschicht beschrieben, kann auch die strahlenhärtbare Schutzschicht neben den abriebfesten Partikeln natürliche und/oder synthetische Fasern und weitere Additive enthalten. Die in der strahlenhärtbaren Verschleißschutzschicht verwendete Acrylatverbindung ist aufgrund ihrer Reaktivität in der Lage, sich an die in der Schutzschicht vorliegenden Fasern, abriebfesten Partikel oder Additive anzulagern bzw. diese zu umhüllen. Während des Verpressens der Holzwerkstoffplatten bei erhöhter Temperatur kommt es durch die Wärmewirkung zu einer chemischen Vernetzung der reaktiven Doppelbindung der Acrylatverbindungen und somit zu einer Ausbildung einer Polymerschicht auf den Fasern, Partikeln, Farbpigmenten oder Additiven, die einem Ausbleichen entgegenwirkt.

In einer Ausführungsform des vorliegenden Verfahrens umfasst die mindestens eine Verschleißschicht abriebfeste Partikel in einer Menge zwischen 5 bis 100 g/m², bevorzugt 10 und 70 g/m², insbesondere bevorzugt 20 und 50 g/m². Je höher die Menge an abriebfesten Partikel in der Verschleißschicht, desto höher ist auch deren Abriebfestigkeit, so dass die Bestimmung der Abriebfestigkeit auch indirekt die Bestimmung der Menge an abriebfesten Partikeln unter Verwendung des vorliegenden Verfahrens ermöglicht.

Die mittels des vorliegenden Verfahrens zu vermessende Verschleißschicht kann eine Dicke zwischen 10 und 150 µm, bevorzugt zwischen 20 und 100 µm, insbesondere bevorzugt zwischen 30 und 80 µm aufweisen.

In einer Variante des vorliegenden Verfahrens wird als Trägerplatte einer Holzwerkstoffplatte, insbesondere eine mitteldichte Faser (MDF), hochdichte Faser (HDF), Grobspan (OSB) oder Sperrholzplatte, eine Zementfaserplatte und/oder Gipsfaserplatte, eine Magnesiumoxid-Platte, eine Holz-Kunststoff-Platte, insbesondere eine Wood Plastic Composite (WPC)-Platte und/oder eine Kunststoffplatte verwendet.

In einer Variante ist vorgesehen, dass zwischen der Trägerplatte und der mindestens einen Verschleißschicht mindestens eine Grundierungsschicht und mindestens eine Dekorschicht angeordnet sind.

Die dabei bevorzugt verwendete Grundierungsschicht umfasst eine Zusammensetzung aus Kasein als Bindemittel und anorganische Pigmente, insbesondere anorganische Farbpigmente. Als Farbpigmente können in der Grundierungsschicht weiße Pigmente wie Titandioxid verwendet werden oder aber auch weitere Farbpigmente, wie Calciumcarbonat, Bariumsulfat oder Bariumcarbonat. Die Grundierung kann neben den Farbpigmenten und dem Kasein noch Wasser als Lösemittel enthalten. Es ist ebenfalls bevorzugt, wenn die aufgetragene pigmentierte Grundschicht aus mindestens einer, bevorzugt aus mindestens zwei, insbesondere bevorzugt aus mindestens vier nacheinander aufgetragenen Lagen bzw. Aufträgen besteht, wobei die Auftragsmenge zwischen den Lagen bzw. Aufträgen gleich oder verschieden sein kann.

Nach Auftrag der Grundierungsschicht wird die selbige in mindestens einem Konvektionstrockner getrocknet. Bei Auftrag von mehreren Grundierungsschichten bzw. Grundierungslagen erfolgt entsprechend jeweils ein Trocknungsschritt nach dem Auftrag der jeweiligen Grundierungsschicht bzw. Grundierungslage. Es ist ebenfalls vorstellbar, dass nach jedem Trocknungsschritt einer Grundierungsschicht ein oder mehrere Schleifaggregate zum Schleifen der Grundierungsschichten vorgesehen sind.

Vorliegend kann in einer weiteren Ausführungsform des Verfahrens im Falle des Auftrages von mindestens einer Grundierungsschicht auf die Trägerplatte anschließend auf die selbige mindestens eine Primerschicht, z.B. in Form eines UV- oder ESH-Spachtels aufgetragen werden.

Die bereits oben erwähnte Dekorschicht kann mittels Direktdruck aufgetragen werden. Im Falle eines Direktdruckes erfolgt der Auftrag einer wasserbasierten pigmentierten Druckfarbe im Tiefdruckverfahren oder im Digitaldruckverfahren, wobei die wasserbasierte pigmentierte Druckfarbe in mehr als einer Schicht auftragbar ist, z.B. in Form von zwei bis zehn Schichten, bevorzugt drei bis acht Schichten.

Im Falle des Direktdrucks erfolgt der Auftrag der mindestens einen Dekorschicht wie erwähnt mittels eines analogen Tiefdruckverfahrens und/oder eines Digitaldruckverfahrens. Das Tiefdruckverfahren ist eine Drucktechnik, bei der die abzubildenden Elemente als Vertiefungen einer Druckform vorliegen, die vor dem Druck eingefärbt wird. Die Druckfarbe befindet sich vornehmlich in den Vertiefungen und wird aufgrund von Anpressdruck der Druckform und von Adhäsionskräften auf den zu bedruckenden Gegenstand, wie z.B. eine Holzfaserträgerplatte, übertragen. Hingegen wird beim Digitaldruck das Druckbild direkt von einem Computer in eine Druckmaschine, wie z.B. einen Laserdrucker oder Tintenstrahldrucker übertragen. Dabei entfällt die Verwendung einer statischen Druckform. In beiden Verfahren ist die Verwendung von wässrigen Farben und Tinten oder farbgebender Mittel auf UV-Basis möglich. Ebenfalls ist es vorstellbar, die genannten Drucktechniken aus Tief- und Digitaldruck zu kombinieren. Eine geeignete Kombination der Drucktechniken kann zum einen unmittelbar auf der Trägerplatte bzw. der zu bedruckenden Schicht erfolgen oder auch vor dem Drucken durch Anpassung der verwendeten elektronischen Datensätze.

Die mit einer Verschleißschicht in Form einer Flüssigoverlayschicht (Variante a) oder einer strahlenhärtbaren Schutzschicht (Variante b) versehene Trägerplatte kann ebenfalls mit einer 3D-Prägestruktur versehen werden, wobei die Oberflächenstruktur bevorzugt in einer Kurztaktpresse optional synchron zum Dekor aufgeprägt wird. Die 3D-Struktur wird bevorzugterweise mittels geeigneter Prägestrukturen eingeprägt bzw. eingedrückt. Die Strukturierungen können unter Verwendung von strukturierten Lackwalzen, strukturierten Kalandern oder strukturierten Pressblechen erfolgen.

Das vorliegende Verfahren ermöglicht somit die Bestimmung der Abriebfestigkeit einer Holzwerkstoffplatte mit folgendem Schichtaufbau: Holzfaserträgerplatte-Grundierungsschicht-Primerschicht-Dekorschicht-Verschleißschicht. Jede dieser Schichten kann in einer oder mehreren Lagen vorhanden sein. Auf der Rückseite der Holzfaserträgerplatte können ein Gegenzugpapier oder ein flüssiger Gegenzug und weitere schalldämmende Schichten aufgetragen werden. Als schalldämmende Schichten kommen insbesondere vernetzte PE-Matten mit Dicken von 1,0 mm oder 0,3-3 mm dicke gefüllte Schwerfolien aber auch geschäumte PE- oder PU-Folien zum Einsatz.

In einer besonders bevorzugten Ausführungsform des vorliegenden Verfahrens wird auf die Unterseite der Holzträgerplatte mindestens eine wärmehärtbare Harzschicht aufgetragen, die jedoch keine abriebfesten Partikel enthält.

Das vorliegende Verfahren zur Bestimmung der Abriebfestigkeit einer auf einer Trägerplatte angeordneten Verschleißschicht wird in einer Vorrichtung bzw. Produktions- oder Fertigungslinie zur Herstellung von Werkstoffplatten durchgeführt, die mindestens eine Vorrichtung zum Auftragen von mindestens einer Verschleißschicht auf eine Trägerplatte, wie z.B. eines Flüssigoverlays, mindestens eine Vorrichtung zum Trocknen der Verschleißschicht und mindestens einen NIR-Detektor zur Durchführung des erfindungsgemäßen Verfahrens umfasst, wobei der mindestens eine NIR-Detektor
a) innerhalb bzw. als Teil der Produktionslinie, insbesondere in Verarbeitungsrichtung nach der Auftragsvorrichtung und der Trocknungsvorrichtung angeordnet ist;
b) außerhalb bzw. separat von der Produktionslinie z.B. in einem geeigneten Prüflabor, oder
c) außerhalb und zusätzlich innerhalb bzw. als Teil der Produktionslinie, und hier insbesondere in Verarbeitungsrichtung nach der Auftragsvorrichtung und der Trocknungsvorrichtung angeordnet ist.

Der mindestens eine NIR-Detektor ist im letzteren Fall demnach in einer Produktions- bzw. Fertigungslinie der mindestens einen Werkstoffplatte, umfassend mindestens eine Auftragsvorrichtung für die aufzutragende Verschleißschicht, wie zum Beispiel eine Walze, Sprühvorrichtung oder Gießvorrichtung und mindestens eine Trocknungsvorrichtung, z.B. in Form eine Konvektionstrockners, IR- und/oder NIR-Trockners angeordnet.

In einer Variante umfasst die vorliegende Vorrichtung bzw. Fertigungslinie eine Vorrichtung zum Auftragen von mindestens einer Harzschicht auf die der Verschleißschicht gegenüberliegende Seite der Trägerplatte und eine Vorrichtung zum Trocknen dieser mindestens einen Harzschicht, wobei beide Vorrichtungen in Verarbeitungsrichtung vor dem mindestens einen NIR-Detektor angeordnet sind.

Es ist insbesondere bevorzugt, wenn die Vorrichtung zum Auftragen der mindestens einen Verschleißschicht auf die Oberseite der Trägerplatte und die Vorrichtung zum Auftragen der mindestens einen Harzschicht auf die Unterseite der Trägerplatte parallel zueinander angeordnet sind, so dass ein gleichzeitiger Auftrag von Verschleißschicht auf die Oberseite und Harzschicht auf die Unterseite der Trägerplatte ermöglicht wird. In Analogie dazu ist es ebenfalls bevorzugt, wenn die jeweiligen Trocknungsvorrichtungen für Verschleißschicht auf der Oberseite und Harzschicht auf der Unterseite der Trägerplatte so zueinander angeordnet sind, dass der Trocknungsvorgang zum selben Zeitpunkt erfolgt.

Es ist auch denkbar, dass die Vorrichtung bzw. Fertigungslinie zur Herstellung der Werkstoffplatten mehr als eine Auftragsvorrichtung für die Verschleißschicht und Harzschicht und mehr als eine Trocknungsvorrichtung für Verschleißschicht/Harzschicht umfasst, wobei der mindestens eine NIR-Detektor in Verarbeitungsrichtung nach der letzten Trocknungsvorrichtung angeordnet ist. In solch einem Fall kann die Auftragsmenge pro Verschleißschicht und pro Auftragsvorrichtung gleich sein oder variieren. Die gesamte Menge an Verschleißschicht kann z.B. im Falle von drei Lagen der Verschleißschicht zwischen 50 g/m² und 120 g/m² variieren und pro Auftragsvorrichtung zwischen 25 Gew% und 50 Gew% betragen.

Es ist auch denkbar, dass die vorliegende Fertigungslinie Auftragsvorrichtungen und Trocknungsvorrichtungen für mindestens eine Grundierungsschicht und/oder Primerschicht umfasst sowie eine Auftragsvorrichtung zum Auftragen von mindestens einer Dekorschicht. In diesem Fall kann die Auftragsvorrichtung für eine Dekorschicht mehrere Druckwalzen zum Tiefdruck (z.B. drei oder vier Druckwalzen) umfassen.

Es ist aber auch denkbar, dass die Fertigungslinie auf Auftragsvorrichtungen und/oder Trocknungsvorrichtungen für Grundierungsschicht, Primerschicht und/oder Dekorschicht verzichtet und bereits vorbedruckte und zwischengelagerte Holzwerkstoffplatten verwendet.

In einer Ausführungsform, in welcher die NIR-Messung sowohl online als auch offline oder auch nur offline erfolgt, sieht der Aufbau einer Fertigungslinie wie folgt aus:
a) eine erste Auftragsvorrichtung zum Auftragen von mindestens einer ersten Lage einer Verschleißschicht auf die Oberseite einer Trägerplatte, insbesondere einer bedruckten Trägerplatte, und von mindestens einer ersten Lage einer Harzschicht (ohne abriebfeste Partikel) auf die Unterseite der Trägerplatte;
b) ein in einer Verarbeitungsrichtung hinter der ersten Auftragsvorrichtung angeordnetes IR-Aggregat (wobei das IR-Aggregat insbesondere einer Erzeugung einer vorbestimmten Mindestoberflächentemperatur und Vergleichmäßigung der Oberflächentemperatur dient) und mindestens einer sich in Verarbeitungsrichtung hinter dem IR-Aggregat angeordneten ersten Trocknungsvorrichtung (z.B. Konvektionstrockner) zum Trocknen der mindestens einen ersten Lage der Verschleißschutzschicht und/oder Harzschicht;
c) eine in Verarbeitungsrichtung hinter der ersten Trocknungsvorrichtung angeordnete zweite Auftragsvorrichtung zum Auftragen von mindestens einer zweiten Lage einer Verschleißschicht auf die Oberseite der Trägerplatte und mindestens einer zweiten Lage einer Harzschicht auf die Unterseite der Trägerplatte;
d) eine in einer Verarbeitungsrichtung hinter der zweiten Auftragsvorrichtung angeordnete zweite Trocknungsvorrichtung (z.B. Konvektionstrockner) zum Trocknen der mindestens einen zweiten Lage der Verschleißschutzschicht und/oder Harzschicht;
e) eine in Verarbeitungsrichtung hinter der zweiten Trocknungsvorrichtung angeordnete dritte Auftragsvorrichtung zum Auftragen von mindestens einer dritten Lage einer Verschleißschutzschicht auf die Oberseite der Trägerplatte und mindestens einer dritten Lage einer Harzschicht auf die Unterseite der Trägerplatte;
f) eine in einer Verarbeitungsrichtung hinter der dritten Auftragsvorrichtung angeordnete dritte Trocknungsvorrichtung (z.B. Konvektionstrockner) zum Trocknen der mindestens einen dritten Lage der Verschleißschutzschicht / Harzschicht;
g) gegebenenfalls ein in Verarbeitungsrichtung hinter der dritten Trocknungsvorrichtung angeordneter NIR-Detektor zur online-Bestimmung der Abriebfestigkeit der auf der Oberseite der Trägerplatte angeordneten Verschleißschicht;
h) eine in Verarbeitungsrichtung hinter dem NIR-Detektor angeordnete Kurztaktpresse (KT-Presse) zum Verpressen und Aushärten der auf der Oberseite der Trägerplatte angeordneten Verschleißschicht und der auf der Unterseite der Trägerplatte angeordneten Harzschicht, und
i) ein von der Produktionslinie separat angeordneter NIR-Detektor zur offline-Bestimmung der Abriebfestigkeit der auf der Oberseite der Trägerplatte angeordneten Verschleißschicht.

Die zum Einsatz kommenden Auftragsvorrichtungen sind bevorzugterweise Auftragswalzen, die ein Auftragen der Schichten auf die Oberseite bzw. die Unterseite der Trägerplatte ermöglichen. Bevorzugterweise erfolgt ein paralleles Auftragen von Verschleißschicht auf die Oberseite und Harzschicht auf die Unterseite der Holzwerkstoffträgerplatte.

Je nach Anforderung der Fertigungslinie ist es selbstverständlich möglich, die Anzahl der Auftragsvorrichtungen und Trocknungsvorrichtungen zu variieren. So kann z.B. im Anschluss an die KT-Presse ein Kühlwender zum Abkühlen der ausgehärteten Holzwerkstoffplatten vorgesehen sein.

Wie aus den obigen Ausführungen entnehmbar, kann die NIR-Messung online nach dem letzten Harzauftrag hinter dem entsprechenden Konvektionstrockner vor der KT-Presse erfolgen. Dabei wird jede einzelne Platte von dem NIR-Detektor online gemessen. Durch das Bewegen des NIR-Detektors quer zur Produktionsrichtung ist eine Messung der Abriebfestigkeit über die gesamte Produktionsbreite möglich. Die NIR-Messung kann jedoch auch ausschließlich oder zusätzlich offline erfolgen. Somit bietet die NIR-Messung ein zerstörungsfreies kontinuierliches Messverfahren zur Bestimmung der Abriebfestigkeit und ermöglicht ein sofortiges Eingreifen in den Prozessablauf.

Die Erfindung wird nachfolgend unter Bezugnahme auf die Figuren der Zeichnungen an einem Ausführungsbeispiel näher erläutert. Es zeigen:
- Figur 1: eine schematische Darstellung der für die Abriebfestigkeitsprüfung zur Kalibrierung einer mit einer Verschleißschicht versehenen Trägerplatte als Referenzprobe entnommenen Einzelproben;
- Figur 2A: ein Diagramm mit NIR Spektren gemessen für Harzschichten ohne verschleißhemmende Partikel aufgetragen auf Platten für Möbelanwendungen;
- Figur 2B: Ein Diagramm mit NIR-Spektren gemessen für Harzschichten ohne und mit verschleißhemmenden Partikeln aufgetragen auf Laminatböden;
- Figur 3: ein Diagramm mit NIR Spektren gemessen für Lackschichten ohne verschleißhemmende Partikel, und
- Figur 4: eine schematische Darstellung einer Fertigungslinie einer Werkstoffplatte unter Verwendung des erfindungsgemäßen Verfahrens.

### Ausführungsbeispiel 1: Erstellen einer Referenzprobe und Kalibrierung

a) Die Kalibirierung im Falle einer bereits ausgehärteten Verschleißschicht erfolgt durch Aufnahme eines NIR-Spektrums einer mit einer bereits ausgehärteten Verschleißschicht versehenen Trägerplatte als Referenzprobe in Analogie zu der unter b) beschriebenen Vorgehensweise.
b) Die Kalibrierung im Falle einer noch nicht ausgehärteten Verschleißschicht erfolgt durch Aufnahme eines NIR-Spektrums einer mit einer Verschleißschicht versehenen, aber noch nicht verpressten Trägerplatte als Referenzprobe, die nach dem Pressvorgang auf die Abriebfestigkeit geprüft wird.

Hierfür wird eine bedruckte HDF-Platte 1 an einer Beschichtungsanlage mittels Auftragswalze von oben mit flüssigem Melamin-Formaldehyd-Harz mit Glas- und Korundpartikeln über mehrere Walzenauftragsmaschinen mit Zwischentrocknung gleichmäßig beschichtet. Die Menge der Feststoffpartikel in der Gesamtbeschichtung variiert je nach produzierter Abriebklasse und liegt zwischen 10 bis 50 g/m². Die verwendeten Feststoffpartikel weisen einen Durchmesser zwischen 10 und 100 µm auf.

Vor dem Pressvorgang in der KT-Presse wird von der beschichteten Trägerplatte ein NIR-Spektrum in einem vorbestimmten Abschnitt 2 der Trägerplatte aufgenommen.

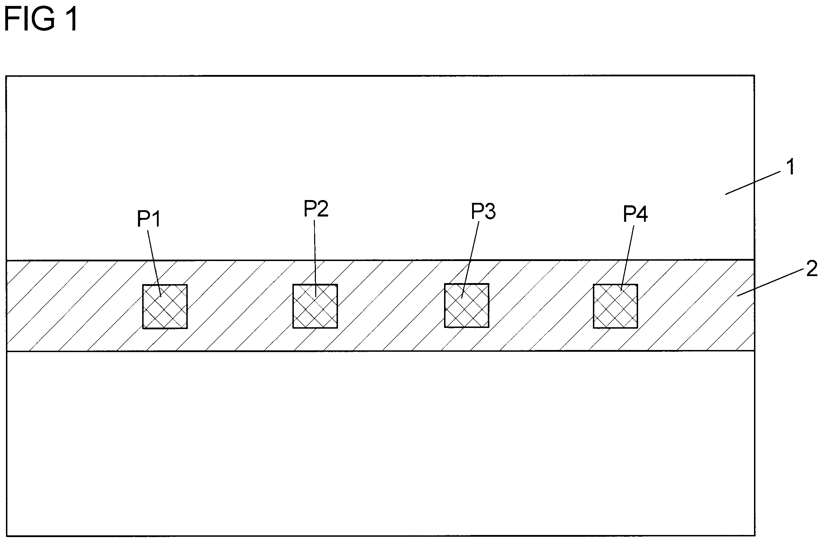

Danach wird die Platte in einer Kurztaktpresse bei 200°C und 40 bar für 8 Sekunden lang gepresst. Dabei wird die Schutzschicht vollständig ausgehärtet. Nach dem Abkühlen der Platte werden mehrere (insbesondere vier) 10 cm x 10 cm Proben (P1-P4) für die Prüfung der Abriebfestigkeit entnommen. Die Probennahme für die Prüfung der Abriebfestigkeit erfolgt in dem Bereich 2 der Platte, in dem das NIR-Spektrum aufgenommen wurde (siehe Figur 1).

Die Abriebwerte werden gemäß dem Verfahren nach DIN EN 15468:2006 (direktbeschichtete Laminatböden ohne Overlay) unter Bezugnahme auf DIN EN 13329 bestimmt und aus den Abriebwerten wird ein Mittelwert gebildet und dem gemessenen NIR-Spektrum zugeordnet. Auf diese Weise werden mehrere Referenzspektren von beschichteten Platten mit unterschiedlichen Farbdekoren aufgenommen. Aus den Referenzspektren wird ein Kalibrationsmodell erstellt, welches zur Ermittlung bzw. Vorhersage der Abriebfestigkeit einer unbekannten Probe genutzt werden kann. Die Erstellung des Kalibrationsmodells erfolgt mittels multivariater Datenanalyse. Dies geschieht mit einer geeigneten Analysesoftware, z.B. mit der Analysesoftware The Unscrambler der Firma CAMO.

Das NIR-Spektrum wurde vorliegend in einem Wellenlängenbereich zwischen 900 und 1700 nm aufgenommen. Für die Aufnahmen der NIR-Spektren wurde ein NIR-Messgerät der Firma Perten verwendet. Der Messkopf trägt die Bezeichnung DA7400.

### Ausführungsbeispiel 2: Online-Messung einer Harzbeschichtung mit und ohne Verschleißpartikel

Die Messung erfolgt durch Aufnahme von NIR-Spektren von einer vorgetrockneten aber noch nicht in einer Kurztaktpresse nachvernetzten Kunstharzschicht (Melaminharz) auf einer Trägerplatte (z. B. HDF), die nach dem Pressvorgang auf das Verhalten gegenüber Abriebbeanspruchung geprüft wird. Durch die Messung einer Vielzahl von Proben sowohl spektroskopisch als auch gemäß der Norm zur Bestimmung der Abriebfestigkeit wurde zuvor über ein Kalibrationsmodell eine Abhängigkeit bestimmt.

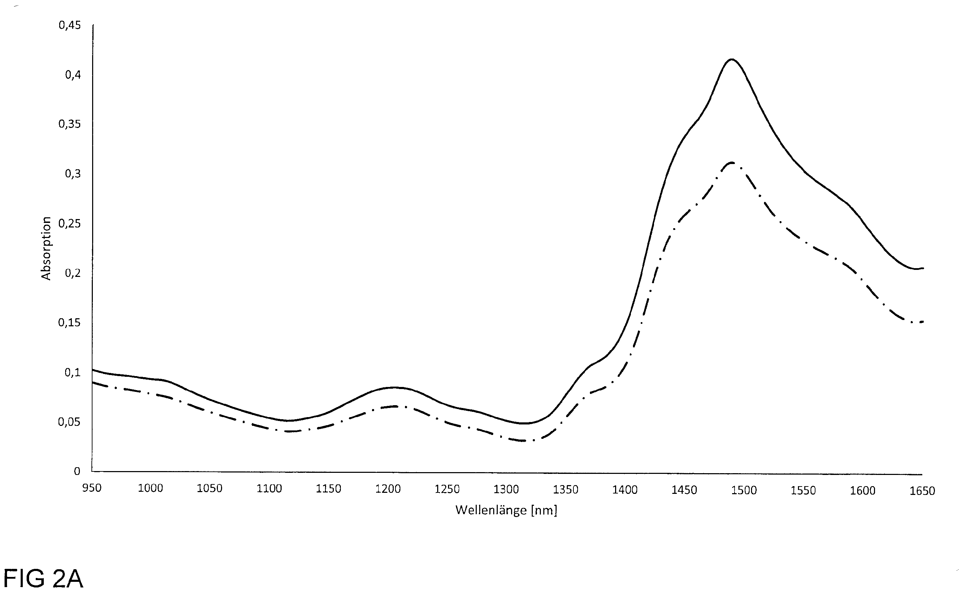

Das Diagramm der Figur 2A zeigt zwei NIR-Spektren von zwei Proben mit unterschiedlichen Harzauftragsmengen, die zu unterschiedlichen Werten bei der Prüfung gegenüber dem Verhalten Abriebbeanspruchung führen. Die Proben, die sich in der Auftragsmenge des Harzes unterscheiden, zeigen wie auch bei anderen spektroskopischen Methoden zu beobachten, eine Abhängigkeit zwischen Menge und Absorption. Im Diagramm der Figur 2A sind zwei Platten für Möbelanwendungen mit Hilfe der NIR-Spektroskopie vermessen worden, die nach der DIN EN 14322: 2004 - Holzwerkstoffe, Melaminbeschichtete Platten zur Verwendung im Innenbereich - 6. Klassifizierung nach der Abriebbeständigkeit, geprüft worden sind (obere, durchgehende Kurve) Klasse 2 (IP > 50 Um), (untere, Punkt-Strich-förmige Kurve) Klasse 1 (IP < 50 Um). Die Spektren zeigen den Unterschied im Verhalten gegenüber Abriebbeanspruchung, der letztlich auf der unterschiedlichen Schichtdicke des Melaminharzes auf der Oberfläche beruht.

Im Falle von unterschiedlichen Harzauftragsmengen unterscheiden sich die NIR-Spektren hauptsächlich in der Höhe der Basislinie aber auch in der Absorption der für das Harz charakteristischen Absorptionsbande bei ca. 1590 nm. Je höher das Ergebnis bei der Prüfung des Verhaltens gegenüber Abriebbeanspruchung ist (d.h. je größer die Harzauftragsmenge), desto höher die Basislinie und die N-H-Bande. Dabei ist die Basislinie eines Spektrums der Bereich ohne "auswertbare Peaks", der im vorliegenden Fall typischerweise im Bereich des Spektrums zwischen 950 und 1350 nm liegt. Die Basis der verwendeten NIR-Spektroskopie ist dabei wie folgt: Aus den mehreren Referenzspektren wird ein Regressionsmodell mittels multivarianter Datenanalyse erstellt, welches zur Ermittlung (Vorhersage) der Abriebfestigkeit einer unbekannten Probe genutzt werden kann. Bei der Erstellung eines Regressionsmodells wird eine Korrelation zwischen den spektralen Daten und des Verhaltens gegenüber Abriebfestigkeit mit wenigen Hauptfaktoren erreicht. Dabei stellt die unterschiedliche Kunstharzmenge die Hauptvarianz der Spektren dar.

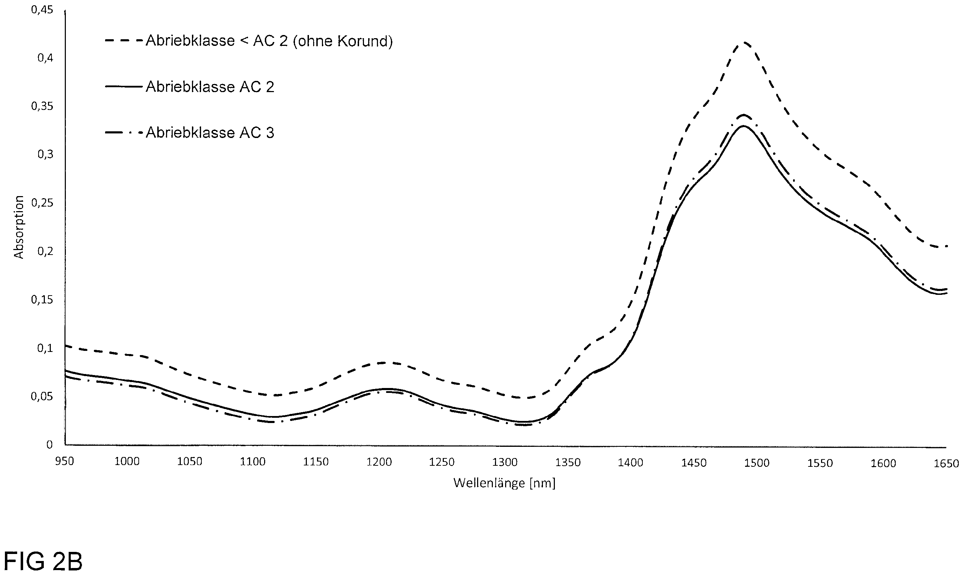

Das Diagramm der Figur 2B zeigt NIR-Spektren von drei Proben mit gleicher Harzauftragsmenge, jedoch ohne Korund als Verschleißpartikel oder mit unterschiedlichen Mengen an Korund.

Das Diagramm der Figur 2B zeigt drei NIR-Spektren von mit Melaminharz beschichteten Proben, die unterschiedliche Ergebnisse bei der Prüfung des Verhaltens gegenüber Abriebbeanspruchung, zeigen. Die Proben wurden gemäß der DIN15468 und DIN EN 13329: 2013 - Laminatböden - Elemente mit einer Deckschicht auf Basis aminoplastischer, wärmehärtbarer Harze, Annex E geprüft. Dabei wurde für die Probe 1 (120 µm Harzschicht ohne Korund, obere, gestrichelte Kurve) bei der Prüfung des Verhaltens gegenüber Abriebbeanspruchung eine Verschleißklasse kleiner AC2, für Probe 2 (120µm Harzschicht mit 20g Korund/m²,untere, durchgehende Kurve) eine Verschleißklasse AC 2, und für die Probe 3 (120 µm Harzschicht mit 40 g Korund/ m², mittlere Punkt-Strich-förmige Kurve) eine Verschleißklasse AC 3 bestimmt. Die Proben 2 und 3 unterscheiden sich dabei demnach in der Menge der Verschleißhemmenden Partikel.

Bei den aufgeführten NIR-Spektren sind die chemischen Informationen der Absorption durch die auftretende an den Feststoffpartikel Streuung des NIR-Lichtes überlagert. Neben der geringen Basislinienverschiebung erkennt man leichte Formveränderung der Spektren, die auf die Streuung an den Feststoffpartikeln zurückzuführen ist. Bei erhöhtem Feststoffgehalt nimmt die Streuung insbesondere bei kürzeren Wellenlängen zu.

So zeigt sich z. B., dass die Basislinien des zweiten Spektrensatzes der Figur 2B trotz höherer Harzmengen in der Oberfläche unter den Basislinien des ersten Spektrensatzes der Figur 2A liegen. Dies ist auf die Streuung an den Korundpartikeln zurückzuführen. Gleiches gilt auch für den ausgeprägten Peak auf der rechten Seite des Spektrums.

Bei Erstellung eines Regressionsmodells wird zusätzlich zu chemischen Informationen der Absorption auch die Streuung der NIR-Strahlung an den Feststoffpartikeln zur Bestimmung des Verhaltens gegenüber Abriebbeanspruchung herangezogen. Entsprechend werden bei der Erstellung des Regressionsmodells die spektroskopischen Daten mit den erhaltenen Werten bei der Prüfung des Verhaltens gegenüber Abriebbeanspruchung in Beziehung gesetzt.

Da die Streuung des NIR-Lichtes an den Feststoffpartikeln einen wesentlichen Beitrag zur Bestimmung des Verhaltens gegenüber Abriebbeanspruchung liefert, werden neben den Hauptfaktoren, die die chemische Varianz der Proben erklären, auch weitere Hauptfaktoren berücksichtigt, die unter anderem die Morphologie der Beschichtung beschreiben. Die Hauptfaktoren sind dabei die Peaks im Spektrum, die Streuung und die Basislinienverschiebung.

### Ausführungsbeispiel 3: Online-Messung einer Lackbeschichtung ohne verschleißhemmende Partikel

Zur Bestimmung der Abriebfestigkeit von Lackschichten mittels NIR-Spektroskopie werden zwei Proben von Holzwerkstoffplatten mit unterschiedlichen Acrylat-Beschichtungsmengen (13 g Lack/m² und 31 g/m²) bereitgestellt. Die Verschleißbestimmung erfolgt gemäß DIN EN 14978 mit der Prüfmethode "Falling Sand".

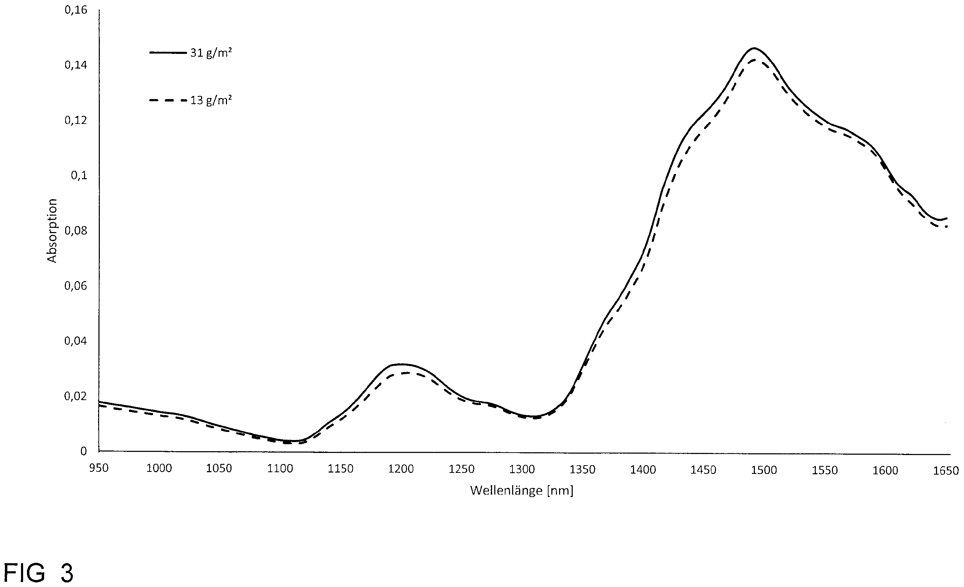

Das Diagramm der Figur 3 zeigt die NIR-Spektren für die zwei vermessenden Proben: die obere, durchgehende Kurve entspricht einer Lack-Menge von 31 g/m² und die untere, gestrichelte Kurve entspricht einer Lack-Menge von 13 g/m². Die NIR-Spektren unterscheiden sich hauptsächlich in der Intensität der für einen Acrylat-Lack charakteristischen Absorptionsbanden bei ca. 1200 nm (2. Oberschwingung der C-H, C-H₂ und C-H₃ Bindungen) und bei ca. 1590 nm (1. Oberschwingung der Amino-Gruppen.) Auch hier zeigt sich ein Zusammenhang zwischen Lackmenge und Absorption. Die größere Lackmenge weist eine leicht höhere Absorption gegenüber der kleineren Lackmenge auf.

### Ausführungsbeispiel 4: Kombination von Online- und Offline-Messung

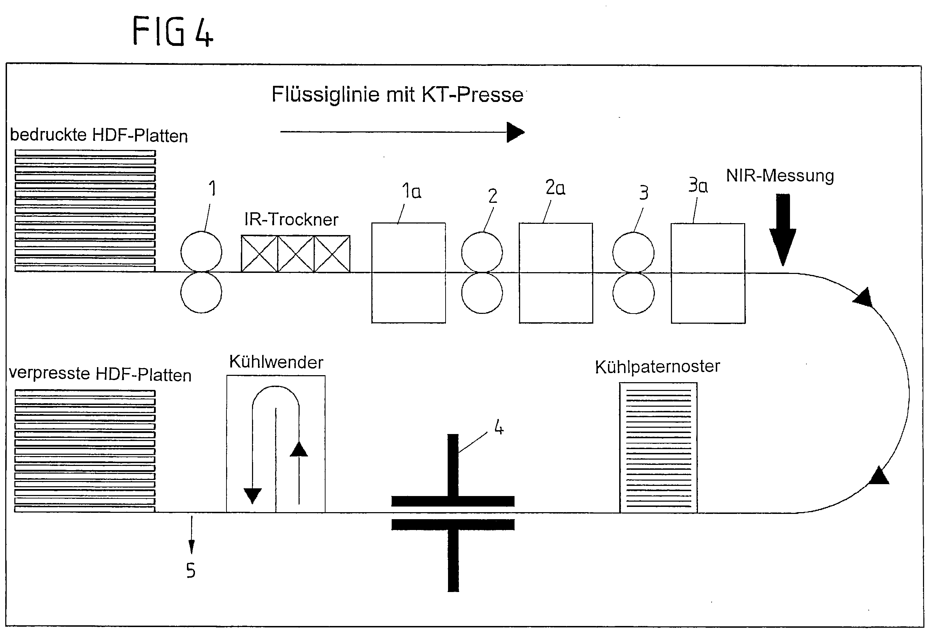

Das Messverfahren wird am Beispiel der Abriebfestigkeitsbestimmung einer Schutzschicht an einer Flüssiglinie mit KT-Presse, die in Figur 4 schematisch dargestellt ist, erläutert.

An der Flüssiglinie werden 2,07 m breite und 2,80 m lange, bedruckte HDF-Platten mit einer Plattendicke von 8 mm mit 30 m/min verarbeitet. Hierfür werden die Platten in drei Auftragswerken (1 bis 3) auf der Oberseite mit einem flüssigen Feststoffpartikel enthaltenen Melamin-Formaldehyd-Harz und von unten mit einem flüssigen Melamin-Formaldehyd-Harz beschichtet. Als Beschichtungsharz dient ein wässriges Melamin-Formaldehyd-Harz mit einem Feststoffanteil von 60 Gew%.

Nach jedem Auftrag werden die Platten in jeweils einem Heißlufttrockner (1a-3a) bei 200°C getrocknet. Die gesamte Auftragsmenge des Flüssigoverlays in dem vorliegenden Ausführungsbeispiel nach drei Aufträgen variiert je nach Anforderungen zwischen 50 g/m² und 120 g/m² und ist zwischen den einzelnen Auftragswerken wie folgt verteilt: AW1- 50 Gew.-% / AW2 -25 Gew.-%/ AW3 - 25 Gew.-%.

Im Anschluss an den dritten Konvektionstrockner 3a erfolgt die NIR-Messung. Dabei wird jede einzelne Platte von dem NIR-Detektor online gemessen, wobei sich der NIR-Detektor quer zur Produktionsrichtung bewegt, so dass eine Bestimmung der Abriebfestigkeit über die gesamte Produktionsbreite der Holzwerkstoffplatte möglich ist.

Anschließend werden die beschichteten Holzwerkstoffplatten in einer Kurztaktpresse 4 bei 200°C für 8 Sekunden gepresst. Der spezifische Druck der KT-Presse beträgt 40 kg/cm² (40 bar). Im Anschluss an den Press- und Härtungsvorgang werden die Platten in einem Kühlwender abgekühlt und anschließend gelagert oder unmittelbar weiter verwendet.

Zur Routinebestimmung der Produktqualität der verpressten und ausgehärteten Werkstoffplatten werden 10 x 10 cm Proben der fertigen Werkstoffplatten verwendet und offline mit einem NIR-Labormessgerät 5 im Rahmen einer Labormessung gegengeprüft. Die Labormessung ermöglicht eine Dokumentation der Produktqualität.

Somit bietet die NIR-Messung ein zerstörungsfreies kontinuierliches Messverfahren zur Bestimmung der Abriebfestigkeit einer Verschleißschicht und ermöglicht ein sofortiges Eingreifen in den Prozessablauf.

## Patentansprüche

1. Verfahren zur Bestimmung der Abriebfestigkeit von mindestens einer auf einer Trägerplatte angeordneten Verschleißschicht
umfassend die Schritte
- Aufnehmen von mindestens einem NIR-Spektrum der auf der mindestens einen Trägerplatte angeordneten Verschleißschicht
a) vor dem Aushärten der mindestens einen Verschleißschutzschicht,
b) nach dem Aushärten der mindestens einen Verschleißschicht, oder
c) vor und nach dem Aushärten der mindestens einen Verschleißschicht mit der Trägerplatte unter Verwendung von mindestens einem NIR-Detektor in einem Wellenlängenbereich zwischen 500 nm und 2500 nm, bevorzugt zwischen 700 nm und 2000 nm, insbesondere bevorzugt zwischen 900 nm und 1700 nm;
- Bestimmen der Abriebfestigkeit der mindestens einen Verschleißschicht durch Vergleich des für die zu bestimmende Abriebfestigkeit der mindestens einen Verschleißschicht ermittelten NIR-Spektrums mit mindestens einem für mindestens eine Referenzprobe der mindestens einen Verschleißschicht mit bekannter Abriebfestigkeit ermittelten NIR-Spektrums mittels einer multivarianten Datenanalyse ,
wobei das mindestens eine für die mindestens eine Referenzprobe ermittelte NIR-Spektrum mit bekannter Abriebfestigkeit der mindestens einen Verschleißschicht a) nach dem Aushärten, oder b) vor und nach dem Aushärten unter Verwendung desselben NIR-Detektors in einem Wellenlängenbereich zwischen 500 nm und 2500 nm, bevorzugt zwischen 700 nm und 2000 nm, insbesondere bevorzugt zwischen 900 nm und 1700 nm vorher bestimmt wurde, wobei der mindestens eine NIR-Detektor über die gesamte Breite der Trägerplatte traversiert.

2. Verfahren nach Anspruch 1, **gekennzeichnet durch** ein automatisch geregeltes System mit Alarmmeldung.

3. Verfahren nach Anspruch 1 oder 2, **dadurch gekennzeichnet, dass** ausgehend von der NIR-Messung eine automatische Anpassung der Auftragsmenge an abriebfesten Partikeln zur automatischen Anpassung der Abriebfestigkeit erfolgt.

4. Verfahren nach einem der vorhergehenden Ansprüche, **dadurch gekennzeichnet, dass** die Bestimmung der Abriebfestigkeit der mindestens einen Verschleißschicht vor dem Aushärten der Verschleißschutzschicht online im laufenden Produktionsprozess erfolgt.

5. Verfahren nach einem der vorhergehenden Ansprüche, **dadurch gekennzeichnet, dass** die Abriebfestigkeit der mindestens einen Verschleißschicht der mindestens einen Referenzprobe vor oder nach dem Aushärten anhand von mindestens einer der ausgehärteten Referenzprobe entnommenen Einzelprobe bestimmt wurde.

6. Verfahren nach 5, **dadurch gekennzeichnet, dass** die Abriebfestigkeit der Verschleißschicht der Referenzprobe anhand von mindestens einer, bevorzugt mindestens vier oder mehr, der Referenzprobe entnommenen Einzelproben, bevorzugt gemäß DIN EN 13329:2009 (D) bestimmt wird.

7. Verfahren nach einem der vorhergehenden Ansprüche, **dadurch gekennzeichnet, dass** die Referenzprobe mit bekannter Abriebfestigkeit der Verschleißschicht eine auf einer Trägerplatte aufgetragene Verschleißschicht umfasst, wobei Trägerplatte und Verschleißschicht der Referenzprobe gleichartig zu der zu vermessenden Probe aus Trägerplatte und Verschleißschicht sind.

8. Verfahren nach einem der vorhergehenden Ansprüche, **dadurch gekennzeichnet, dass** die mindestens eine Verschleißschicht ausgewählt ist aus der Gruppe enthaltend a) mindestens eine wärmehärtbare Schutzschicht und/oder b) mindestens eine UV-härtbare und/oder elektronenstrahlhärtbare -Schutzschicht.

9. Verfahren nach einem der vorhergehenden Ansprüche, **dadurch gekennzeichnet, dass** die mindestens eine Verschleißschicht abriebfeste Partikel, insbesondere ausgewählt aus der Gruppe enthaltend Aluminiumoxide, Borcarbide, Siliziumdioxide und Siliziumcarbide umfasst.

10. Verfahren nach einem der vorhergehenden Ansprüche, **dadurch gekennzeichnet, dass** die mindestens eine Verschleißschicht abriebfeste Partikel in einer Menge zwischen 5 und 100 g/m², bevorzugt 10 und 70 g/m², insbesondere bevorzugt 20 und 50 g/m² umfasst.

11. Verfahren nach einem der vorhergehenden Ansprüche, **dadurch gekennzeichnet, dass** die mindestens eine Verschleißschicht eine Dicke zwischen 10 und 150 µm, bevorzugt zwischen 20 und 100 µm, insbesondere bevorzugt zwischen 30 und 80 µm aufweist.

12. Verfahren nach einem der vorhergehenden Ansprüche, **dadurch gekennzeichnet, dass** die mindestens eine Verschleißschicht mindestens zwei Lagen, bevorzugt mindestens drei nacheinander aufgetragene Lagen umfasst.

13. Verfahren nach Anspruch 12, **dadurch gekennzeichnet, dass** die Auftragsmenge der Lagen gleich oder verschieden ist.

14. Verfahren nach einem der vorhergehenden Ansprüche, **dadurch gekennzeichnet, dass** die mindestens eine Trägerplatte eine Holzwerkstoffplatte, insbesondere eine mitteldichte Faserplatte, hochdichte Faserplatte, Grobspanplatte oder Sperrholzplatte, eine Zementfaserplatte, Gipsfaserplatte, eine Magnesiumoxid-Platte, eine Holz-Kunststoff-Platte und/oder eine Kunststoffplatte ist.

## Claims

1. Method for determining the abrasion resistance of at least one wear layer arranged on a core board
comprising the steps
- Recording at least one NIR spectrum of the wear layer arranged on the at least one core board
a) before hardening of the at least one wear layer,
b) after hardening of at least one wear layer; or
c) before and after hardening of the at least one wear layer with the core board using at least one NIR detector in a wavelength range between 500 nm and 2500 nm, preferably between 700 nm and 2000 nm, in particular preferably between 900 nm and 1700 nm;
- Determining the abrasion resistance of the at least one wear layer by comparing the NIR spectrum recorded for determining the abrasion resistance of the at least one wear layer with at least one NIR spectrum recored for at least one reference sample of the at least one wear layer with known abrasion resistance by means of a multivariate data analysis,
wherein the at least one NIR spectrum recorded for the at least one reference sample with known abrasion resistance of the at least one wear layer a) after hardening or b) before and after hardening has been determined beforehand using the same NIR detector in a wavelength range between 500 nm and 2500 nm, preferably between 700 nm and 2000 nm, in particular preferably between 900 nm and 1700 nm,
wherein the at least one NIR detector traverses the entire width of the core board.

2. Method according to claim 1, **characterised by** an automatically controlled system with alarm message.

3. Method according to claim 1 or 2, **characterized in that**, starting from the NIR measurement, an automatic adjustment of the application quantity of abrasion-resistant particles for the automatic adjustment of the abrasion resistance takes place.

4. Method according to one of the preceding claims, **characterized in that** the abrasion resistance of the at least one wear layer is determined online in the running production process before the wear layer hardens.

5. Method according to one of the preceding claims, **characterized in that** the abrasion resistance of the at least one wear layer of the at least one reference sample has been determined before or after hardening on the basis of at least one individual sample taken from the hardened reference sample.

6. Method according to 5, **characterized in that** the abrasion resistance of the wear layer of the reference sample is determined on the basis of at least one, preferably at least four or more, individual samples taken from the reference sample, preferably according to DIN EN 13329:2009 (D).

7. Method according to one of the preceding claims, **characterized in that** the reference sample with known abrasion resistance of the wear layer comprises a wear layer applied to a core board, the core board and the wear layer of the reference sample being identical to the sample to be measured made of core board and wear layer.

8. Method according to one of the preceding claims, **characterized in that** the at least one wear layer is selected from the group comprising a) at least one heat-curable protective layer and/or b) at least one UV-curable and/or electron beam-curable protective layer.

9. Method according to one of the preceding claims, **characterized in that** the at least one wear layer comprises abrasion-resistant particles, in particular selected from the group comprising aluminum oxides, boron carbides, silicon dioxides and silicon carbides.

10. Method according to one of the preceding claims, **characterized in that** the at least one wear layer comprises abrasion-resistant particles in a quantity between 5 and 100 g/m², preferably 10 and 70 g/m², in particular preferably 20 and 50 g/m².

11. Method according to one of the preceding claims, **characterized in that** the at least one wear layer has a thickness between 10 and 150 µm, preferably between 20 and 100 µm, in particular preferably between 30 and 80 µm.

12. Method according to one of the preceding claims, **characterized in that** the at least one wear layer comprises at least two layers, preferably at least three successively applied layers.

13. Method according to claim 12, **characterized in that** the quantity applied of the layers is the same or different.

14. Method according to one of the preceding claims, **characterized in that** the at least one core board is a wood-based material board, in particular a medium-density fibre board, high-density fibre board, coarse particle board or plywood board, a cement fibre board, gypsum fibre board, a magnesium oxide board, a wood-plastic board (WPC) and/or a plastic board.

## Revendications

1. Procédé de détermination de la résistance à la friction d'au moins une couche d'usure agencée sur une plaque de support
comprenant les étapes de
- la réception d'au moins un spectre NIR de la couche d'usure agencée sur l'au moins une plaque de support
a) avant le durcissement de l'au moins une couche de protection contre l'usure,
b) après le durcissement de l'au moins une couche d'usure, ou
c) avant et après le durcissement de l'au moins une couche d'usure avec la plaque de support en utilisant au moins un détecteur NIR dans une plage de longueur d'onde entre 500 nm et 2 500 nm, de préférence entre 700 nm et 2 000 nm, en particulier de préférence entre 900 nm et 1 700 nm ;
- la détermination de la résistance à la friction de l'au moins une couche d'usure par comparaison du spectre NIR, déterminé pour la résistance à la friction à déterminer de l'au moins une couche d'usure, avec au moins un spectre NIR déterminé pour au moins un échantillon de référence de l'au moins une couche d'usure avec une résistance à la friction connue au moyen d'une analyse de données multivariée (MDA),
dans lequel l'au moins un spectre NIR déterminé pour l'au moins un échantillon de référence a été déterminé précédemment avec une résistance à la friction connue de l'au moins une couche d'usure a) après le durcissement, ou b) avant et après le durcissement en utilisant le même détecteur NIR dans une plage de longueur d'onde entre 500 nm et 2 500 nm, de préférence entre 700 nm et 2 000 nm, en particulier de préférence entre 900 nm et 1 700 nm,
dans lequel l'au moins un détecteur NIR traverse la largeur entière de la plaque de support.

2. Procédé selon la revendication 1, **caractérisé par** un système à régulation automatique avec message d'alarme.

3. Procédé selon la revendication 1 ou 2, **caractérisé en ce qu'**à partir de la mesure NIR une adaptation automatique de la quantité d'application aux particules résistantes à la friction est effectuée pour l'adaptation automatique de la résistance à la friction.

4. Procédé selon l'une des revendications précédentes, **caractérisé en ce que** la détermination de la résistance à la friction de l'au moins une couche d'usure est effectuée avant le durcissement de la couche de protection d'usure en ligne dans le processus de production en cours.

5. Procédé selon l'une quelconque des revendications précédentes, **caractérisé en ce que** la résistance à la friction de l'au moins une couche d'usure de l'au moins un échantillon de référence a été déterminée avant ou après le durcissement au moyen d'au moins un échantillon individuel retiré de l'échantillon de référence durci.

6. Procédé selon la revendication 5, **caractérisé en ce que** la résistance à la friction de la couche d'usure de l'échantillon de référence est déterminée au moyen d'au moins un, de préférence au moins quatre ou plus, échantillons individuels retirés de l'échantillon de référence, de préférence selon DIN EN 13329:2009 (D).

7. Procédé selon l'une des revendications précédentes, **caractérisé en ce que** l'échantillon de référence avec une résistance à la friction connue de la couche d'usure comporte une couche d'usure appliquée sur une plaque de support, dans lequel la plaque de support et la couche d'usure de l'échantillon de référence sont de même type que l'échantillon à mesurer de la plaque de support et la couche d'usure.

8. Procédé selon l'une des revendications précédentes, **caractérisé en ce que** l'au moins une couche d'usure est sélectionnée dans le groupe contenant a) au moins une couche de protection thermodurcissable et/ou b) au moins une couche de protection durcissable aux UV et/ou durcissable au faisceau électronique.

9. Procédé selon l'une des revendications précédentes, **caractérisé en ce que** l'au moins une couche d'usure comporte des particules résistantes à la friction, en particulier sélectionnées dans le groupe contenant des oxydes d'aluminium, des carbures de bore, des dioxydes de silicium et des carbures de silicium.

10. Procédé selon l'une des revendications précédentes, **caractérisé en ce que** l'au moins une couche d'usure comporte des particules résistantes à la friction dans une quantité entre 5 et 100 g/m², de préférence 10 et 70 g/m², en particulier de préférence 20 et 50 g/m².

11. Procédé selon l'une des revendications précédentes, **caractérisé en ce que** l'au moins une couche d'usure présente une épaisseur entre 10 et 150 µm, de préférence entre 20 et 100 µm, en particulier de préférence entre 30 et 80 µm .

12. Procédé selon l'une des revendications précédentes, **caractérisé en ce que** l'au moins une couche d'usure comporte au moins deux couches, de préférence au moins trois couches appliquées les unes après les autres.

13. Procédé selon la revendication 12, **caractérisé en ce que** la quantité d'application des couches est identique ou différente.

14. Procédé selon l'une des revendications précédentes, **caractérisé en ce que** l'au moins une plaque de support est une plaque de matériau dérivé du bois, en particulier une plaque de bois de fibre à moyenne densité, une plaque de bois de fibre à haute densité, un panneau à copeaux orientés ou une plaque de contreplaqué, une plaque de fibre de ciment, une plaque de fibre de plâtre, une plaque d'oxyde de magnésium, une plaque de plastique et de bois et/ou une plaque de plastique.
